# EUROPÄISCHE PATENTSCHRIFT

(11) **EP 3 004 956 B1**
(45) Veröffentlichungstag und Bekanntmachung des Hinweises auf die Patenterteilung: **29.12.2021**
(21) Anmeldenummer: 14755968.6
(22) Anmeldetag: 02.06.2014
(51) Int. Cl.: G02B 6/42

(54) **VORRICHTUNG ZUM EINKOPPELN UND/ODER AUSKOPPELN OPTISCHER SIGNALE**
DEVICE FOR COUPLING AND/OR DECOUPLING OPTICAL SIGNALS
DISPOSITIF D'INJECTION ET/OU D'EXTRACTION DE SIGNAUX OPTIQUES

(30) Priorität: 31.05.2013 DE 102013105650
(43) Veröffentlichungstag der Anmeldung: 13.04.2016
(73) Patentinhaber: Silicon Line GmbH, 80687 München (DE)
(72) Erfinder: HOELTKE, Holger, 80995 Muenchen (DE); GROEPL, Martin, 87527 Sonthofen Oberallgaeu (DE)
(74) Vertreter: Hofmann, Andreas
(86) Internationale Anmeldenummer: PCT/DE2014/200243
(87) Internationale Veröffentlichungsnummer: WO 2014/190991

(56) Entgegenhaltungen:
- EP-A1- 0 292 328
- EP-A1- 2 189 828
- EP-A2- 0 726 477
- WO-A1-02/42820
- WO-A1-97/11398
- WO-A1-02/093223
- GB-A- 2 356 066
- JP-A- 2002 232 054
- US-A1- 2001 036 344
- US-A1- 2005 018 969
- US-A1- 2007 258 680
- US-A1- 2009 285 536
- US-A1- 2010 118 909
- None

## Beschreibung

### Technisches Gebiet

Die vorliegende Erfindung betrifft eine Vorrichtung zum Einkoppeln optischer Signale in mindestens einen Wellenleiter gemäß dem Oberbegriff des Anspruchs 1 (vgl. Druckschrift JP 2002-232054 A).

Die vorliegende Erfindung betrifft des Weiteren eine komplementäre Vorrichtung zum Auskoppeln optischer Signale aus mindestens einem Wellenleiter gemäß dem Oberbegriff des Anspruchs 2 (vgl. Druckschrift JP 2002-232054 A).

### Stand der Technik, insbesondere dessen Nachteile und technische Probleme

Vertical Cavity Surface Emitting Lasers (VCSEL) bzw. Fotodioden (PD) senden bzw. empfangen als optische Wandler, insbesondere als aktiv-optische Wandler, optische Signale im Wesentlichen senkrecht zu ihrer Oberfläche.

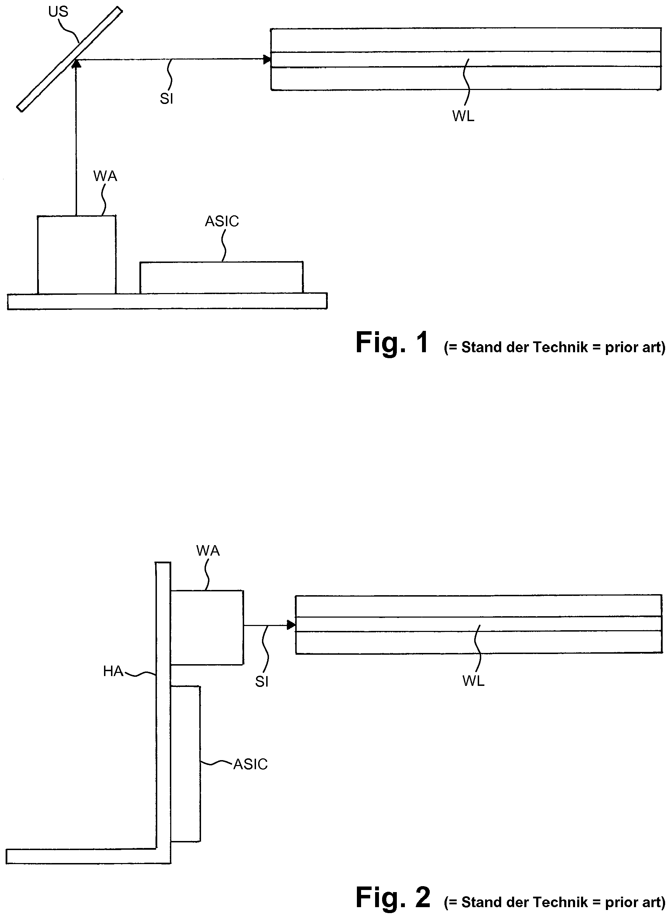

Um derartige optischen Signale SI in einen optischen Wellenleiter WL einzukoppeln bzw. aus einem optischen Wellenleiter WL auszukoppeln, sind die optischen Signale SI über einen 45 Grad-Umlenkspiegel US aus der Sende- bzw. Empfangsrichtung des optischen Wandlers WA in eine um neunzig Grad versetzte Ebene des Wellenleiters WL umzulenken, wie Fig. 1 entnehmbar.

So beschreibt die Druckschrift DE 10 2012 005 618 A1 ein aktives optisches Kabel, dessen Fasern stoffschlüssig an einem optischen Substrat befestigt sind. Die Fasern koppeln hierbei an einen integrierten optischen Wellenleiter. Ein Umlenkelement leitet den Freistrahl zur auf der Oberfläche des Substrats angeordneten Prozesseinheit, wobei der Freistrahl eine Richtungsänderung von neunzig Grad erfährt, um den Freistrahl in eine Sende-/Empfangseinheit zu lenken.

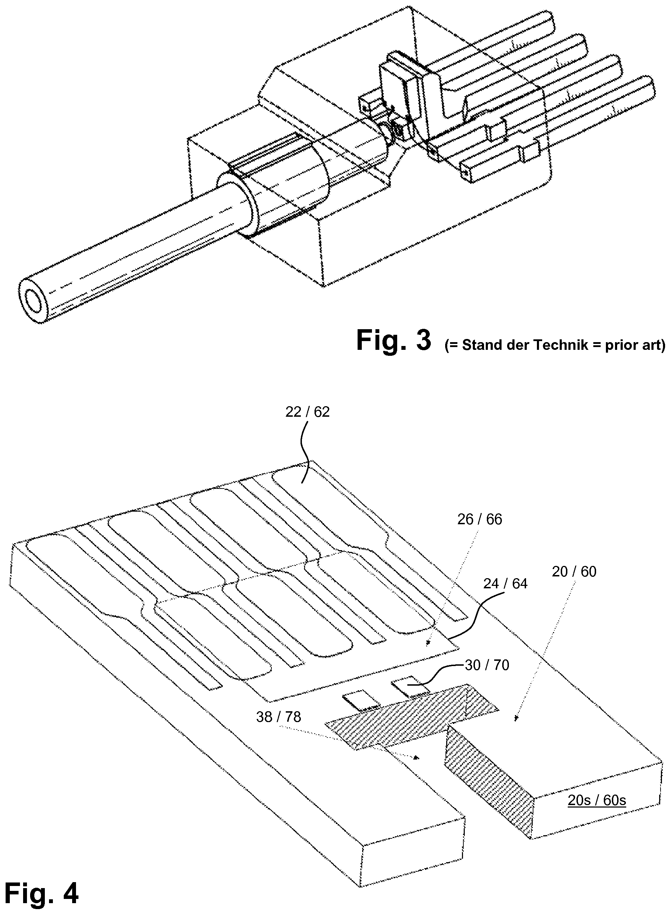

Alternativ lassen sich optische Wandler WA mittels einer entsprechenden Halterung HA so anordnen, dass ihre Sende- bzw. Empfangsrichtung der Ebene des Wellenleiters WL entspricht, wie Fig. 2 und Fig. 3 entnehmbar.

Nachteilig ist bei den aus dem Stand der Technik bekannten Lösungen (vgl. EP 0 292 328 A1, WO 02/093223 A1, EP 2 189 828 A1) die Baugröße der Ein- und Auskoppelvorrichtungen. Aufgrund dieser Baugröße und Bauform eignen sich die bekannten Lösungen nicht zur Realisierung von Applikationen im Heim- und Mobilelektronikbereich. Dies impliziert längere Verbindungswege zwischen den Bauteilen und folglich längere Latenzzeiten.

Darüber hinaus ist der Herstellungsaufwand für die aus dem Stand der Technik bekannten Lösungen hoch und kostenintensiv.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, eine Vorrichtung gemäß dem Oberbegriff des Anspruchs 1 sowie eine Vorrichtung gemäß dem Oberbegriff des Anspruchs 2 so weiterzubilden, dass eine entsprechende Miniaturisierung der Ein- und Auskoppelvorrichtung bei geringen optischen Verlusten ermöglicht wird; gleichzeitig soll der Aufwand in der Herstellung gering sein.

Diese Aufgabe wird durch eine Vorrichtung mit den Merkmalen des Anspruchs 1 sowie durch eine Vorrichtung mit den Merkmalen des Anspruchs 2 gelöst, insbesondere durch eine miniaturisierte sowie modularisierte aktiv-optische Sendeeinheit und/oder durch eine miniaturisierte sowie modularisierte aktiv-optische Empfangseinheit. Vorteilhafte Ausgestaltungen und zweckmäßige Weiterbildungen der vorliegenden Erfindung sind in den jeweiligen Unteransprüchen gekennzeichnet. Bei der vorliegenden Erfindung werden über elektrische Anschlusskontakte eingehende elektrische Signale in mindestens einem Schaltkreis verarbeitet. Der Schaltkreis, der als anwendungsspezifische integrierte Schaltung oder als Application-Specific Integrated Circuit (ASIC), zum Beispiel als custom chip, ausgeführt sein kann, steuert mindestens einen elektro-optischen Wandler, insbesondere mindestens einen Laser, zum Beispiel mindestens einen Vertical Cavity Surface Emitting Lasers (VCSEL), an.

Dieser elektro-optische Wandler ist in mindestens einem sendeseitigen Aufnehm-/Ausrichtmodul aufgenommen oder integriert, insbesondere eingebettet, und sendet die gewandelten optischen Signale axial in mindestens einen Wellenleiter, zum Beispiel in mindestens eine Glasfaser, aus.

Das sendeseitige Aufnehm-/Ausrichtmodul, das kraftschlüssig in einer in einem sendeseitigen Substrat vorgesehenen Ausnehmung aufgenommen, insbesondere eingepasst, ist, weist mindestens eine nut- oder rinnenförmige Vertiefung auf, entlang derer der Wellenleiter in Bezug auf den elektro-optischen Wandler ausgerichtet werden kann.

Das sendeseitige Aufnehm-/Ausrichtmodul ermöglicht eine modulare Bauweise, und insbesondere eine Ausrichtung bzw. Fixierung des Wellenleiters bezüglich des elektro-optischen Wandler. Hierdurch können die Abmessungen der sendeseitigen Vorrichtung gemäß der vorliegenden Erfindung reduziert werden, wobei die Modularisierung auch unter produktions- und kostentechnischen Gesichtspunkten als sehr vorteilhaft anzusehen ist.

Das Substrat selbst fungiert als Aufnahmemedium nicht nur für das sendeseitige Aufnehm-/Ausrichtmodul, sondern auch für den sendeseitigen Schaltkreis und für die sendeseitigen Anschlusskontakte. Des Weiteren verfügt das Substrat über Kommunikationsschnittstellen und elektrische Verbindungen, um die Kommunikation der einzelnen Komponenten miteinander zu ermöglichen.

Empfangsseitig werden die über den Wellenleiter eingehenden optischen Signale durch mindestens einen opto-elektrischen Wandler aus Richtung der Achse des Wellenleiters, insbesondere der Glasfaser, ausgekoppelt.

Dieser opto-elektrische Wandler, der mindestens eine Diode, insbesondere mindestens eine Fotodiode, sein kann, ist in mindestens einem empfangsseitigen Aufnehm-/Ausrichtmodul aufgenommen oder integriert, insbesondere eingebettet, und wandelt die optischen Signale in elektrische Signale um.

Die gewandelten elektrischen Signale werden an mindestens einen empfangsseitigen Schaltkreis, insbesondere an mindestens eine anwendungsspezifische integrierte Schaltung oder an mindestens einen Application-Specific Integrated Circuit (ASIC), zum Beispiel an mindestens einen custom chip, ausgegeben.

Der empfangsseitige Schaltkreis verarbeitet und erforderlichenfalls verstärkt die eingehenden elektrischen Signale, gegebenenfalls auch verstärkt, und gibt diese Signale an empfangsseitige Anschlusskontakte aus.

Das empfangsseitige Aufnehm-/Ausrichtmodul, das kraftschlüssig in einer in einem empfangsseitigen Substrat vorgesehenen Ausnehmung aufgenommen, insbesondere eingepasst, ist, weist mindestens eine nut- oder rinnenförmige Vertiefung auf, entlang derer der Wellenleiter in Bezug auf den opto-elektrischen Wandler ausgerichtet werden kann.

Das empfangsseitige Aufnehm-/Ausrichtmodul ermöglicht eine modulare Bauweise, und insbesondere eine Ausrichtung bzw. Fixierung des Wellenleiters bezüglich des opto-elektrischen Wandler. Hierdurch können die Abmessungen der empfangsseitigen Vorrichtung gemäß der vorliegenden Erfindung reduziert werden, wobei die Modularisierung auch unter produktions- und kostentechnischen Gesichtspunkten als sehr vorteilhaft anzusehen ist.

Das Substrat selbst fungiert als Aufnahmemedium nicht nur für das empfangsseitige Aufnehm-/Ausrichtmodul, sondern auch für den empfangsseitigen Schaltkreis und für die empfangsseitigen Anschlusskontakte. Des Weiteren verfügt das Substrat über Kommunikationsschnittstellen und elektrische Verbindungen, um die Kommunikation der einzelnen Komponenten miteinander zu ermöglichen.

Gemäß einer bevorzugten Ausführungsform der vorliegenden Erfindung ist der Wellenleiter bezüglich seines Querschnitts zumindest partiell in der Vertiefung des Aufnehm-/Ausrichtmoduls aufgenommen, insbesondere zumindest partiell in der Vertiefung des Aufnehm-/Ausrichtmoduls versenkt. Hierdurch kann das Aufnehm-/Ausrichtmodul seine Ausrichtfunktion für den Wellenleiter besonders effektiv erfüllen.

Die beispielsweise V-förmig ausgebildete Vertiefung ist in einem sich in axialer Richtung des Wellenleiters erstreckenden Ausrichtungsteil des Aufnehm-/Ausrichtmoduls angeordnet. Die Vertiefung ist lateral am Ausrichtungsteil vorgesehen, wodurch insofern eine besonders raumsparende Fixierung des Wellenleiters ermöglicht wird, als die Innenwand der Ausnehmung im Substrat das Gegenstück bildet (, was bei konventionellen V-Führungsschienen, die unterhalb des Wellenleiters angeordnet sind, nicht möglich ist).

Die Vertiefung ist einem Teilbereich, insbesondere einem Abschnitt, der Außenkontur des Wellenleiters zugeordnet; insbesondere umschließt die Vertiefung den Wellenleiter nicht vollständig, sondern stellt auf einer Seite des Wellenleiters eine Ausrichtungshilfe bereit.

Angrenzend an dieses Ausrichtungsteil, insbesondere quer zum dem Wandler zugewandten Ende des Ausrichtungsteils, zum Beispiel senkrecht zum dem Wandler zugewandten Ende des Ausrichtungsteils, kann das Aufnehm-/Ausrichtmodul zur Aufnahme des Wandlers zweckmäßigerweise ein Aufnahmeteil aufweisen.

Gemäß einer bevorzugten Ausführungsform der vorliegenden Erfindung kann die Geometrie des, insbesondere mechanischen, Aufnehm-/Ausrichtmoduls also T-förmig sein, um die kraftschlüssige Verbindung des Aufnehm-/Ausrichtmoduls mit dem Substrat zu gewährleisten.

Das Aufnehm-/Ausrichtmodul kann hierbei mittels Klebeverbindung und/oder Lötverbindung und/oder Steckverbindung und/oder sonstiger Fügeverbindung am als Komplementärteil oder Gegenstück des Aufnehm-/Ausrichtmoduls fungierenden Substrat befestigt sein.

Nach einer vorteilhaften Weiterbildung der vorliegenden Erfindung kann das vom Wandler abgewandte Ende des Aufnehm-/Ausrichtmoduls, insbesondere das vom Wandler abgewandte Ende des Ausrichtungsteils, im Wesentlichen bündig mit der Stirnseite des Substrats abschließen.

Unabhängig hiervon oder in Verbindung hiermit kann die Höhe des Aufnehm-/Ausrichtmoduls im Wesentlichen bündig mit der Höhe des Substrats abschließen, um eine möglichst homogene Integration des Aufnehm-/Ausrichtmoduls im Substrat zu gewährleisten.

Gemäß einer zweckmäßigen Ausgestaltungsform der vorliegenden Erfindung kann das Aufnehm-/Ausrichtmodul gänzlich aus einem optisch transparenten Medium gefertigt sein. Diese Variante ist unter herstellungstechnischen Gesichtspunkten deutlich kostengünstiger als eine lokale oder punktuelle Einbringung eines optischen Mediums in das Aufnehm-/Ausrichtmodul.

Das Aufnehm-/Ausrichtmodul, insbesondere dessen Aufnahmeteil, kann zweckmäßigerweise mindestens einen zwischen dem Wandler und dem Wellenleiter vorgesehenen Durchlass, insbesondere mindestens eine Bohrung und/oder mindestens ein optisch transparentes Medium, für die optischen Signale aufweisen.

Gemäß einer bevorzugten Ausführungsform der vorliegenden Erfindung weist
- das Substrat mindestens einen Kontakt, insbesondere mindestens eine Kontaktfläche, und/oder
- das Aufnehm-/Ausrichtmodul mindestens einen Kontakt, insbesondere mindestens eine Kontaktfläche,
zum Anschließen des Wandlers aufweist, wobei der Kontakt des Substrats dem Kontakt des Aufnehm-/Ausrichtmoduls zuordbar ist.

Vorzugsweise sind diese Kontakte aus fertigungstechnischen und kostenbezogenen Gründen an der Oberfläche angebracht.

In zweckmäßiger Weise kann über derartige Kontakte sowohl auf dem Substrat als auch auf dem Aufnehm-/Ausrichtmodul eine elektrische Verbindung zwischen den beiden Komponenten hergestellt werden, beispielsweise mittels Drahtbond- oder Lötprozess, mittels Leitkleber, mittels elektrischer Federkontakte oder in ähnlicher Weise.

Nach einer vorteilhaften Weiterbildung der vorliegenden Erfindung ist mindestens eine Kontaktfläche zumindest partiell in das Substrat und/oder in das Aufnehm-/Ausrichtmodul eingebettet. Dies ermöglicht die Anbindung von im Substrat und/oder im Aufnehm-/Ausrichtmodul eingebetteten Komponenten.

So können die Kontakte mit dem einen Ende auf der Oberfläche des Substrats und/oder des Aufnehm-/Ausrichtmoduls liegen, insbesondere für die Verbindung von Substrat und Aufnehm-/Ausrichtmodul, und gleichzeitig mit dem anderen Ende im Substrat und/oder im Aufnehm-/Ausrichtmodul eingebettet sein, um eingebettete Komponenten direkt anzubinden. Auch ist es denkbar, den Strom- und/oder den Datentransfer kontaktfrei, insbesondere induktiv, zu gestalten.

In bevorzugter Weise können der Schaltkreis und die Anschlusskontakte so angeordnet sein, dass sie sich im Wesentlichen in einer Ebene befinden. Dies ermöglicht eine Reduktion der Bauhöhe, insbesondere wenn der Schaltkreis die Bauhöhe des Substrats nicht übersteigt.

Nach einer vorteilhaften Weiterbildung der vorliegenden Erfindung ist der Schaltkreis in das Substrat eingebettet, insbesondere geklebt, gelötet oder gesteckt, um eine besonders innige Verbindung und Anbindung zu den, insbesondere im Substrat eingebetteten, Kontakten herzustellen.

Gemäß einer zweckmäßigen Ausgestaltungsform der vorliegenden Erfindung ist der Wellenleiter, insbesondere in der Ebene des Substrats, koaxial zu einem an den Anschlusskontakten befestigbaren Peripheriekabel oder Peripheriekontakt ausgerichtet. Dies kann besonders für den Aufbau von optisch aktiven Kabeln von Bedeutung sein.

Gemäß einer bevorzugten Ausführungsform der vorliegenden Erfindung kann die Vorrichtung ein umschließendes Gehäuse aufweisen, durch das die Vorrichtung vor äußeren Einflüssen schützbar ist. Dies ist besonders für den Gebrauch als optisch aktives Kabel von Bedeutung, zumal das Gehäuse dann als Stecker mit einem Mechanismus zur Fixierung an Peripheriegeräten eingesetzt werden kann.

Die vorgeschlagene Vorrichtung zum Einkoppeln bzw. Auskoppeln optischer Signale lässt sich in vielen Anwendungsbereichen gewinnbringend einsetzen, in erster Linie zur schnellen Signalübertragung zwischen zwei Komponenten mit elektrischer Signalführung.

So betrifft die vorliegende Erfindung vor allem die Verwendung zum Aufbau von, insbesondere steckbaren, aktiven optischen Kabeln zur schnellen und verlustarmen Signalumwandlung sowie Datenübertragung auf sehr kleinem Raum, um die elektrisch prozessierten Daten schnell an die verschiedenen Einheiten weiterzuleiten. Die extrem kurzen Leitungswege innerhalb der Vorrichtung ermöglichen sehr kurze Latenzzeiten.

Erfindungsgemäß erlaubt die Modularisierung einen extrem hohen Automatisierungsgrad in der Fertigung. Durch den getrennten Aufbau des Substrats mit ASIC und des mechanischen Aufnehm-/Ausrichtmoduls mit eingebettetem elektro-optischem und/oder opto-elektrischem Wandler, insbesondere mit eingebettetem elektro-optischem Sender und/oder mit eingebettetem opto-elektrischem Empfänger, und fest verbundener Faser ist eine getrennte Weiterverarbeitung der beiden Komponenten möglich.

Beispielsweise kann das Substrat mit ASIC in einem automatisierten "Pick and Place"-Prozess per Maschine auf einer Leiterplatte bestückt und schwallgelötet werden, währenddessen das Aufnehm-/Ausrichtmodul mit der meist hitzeempfindlichen Faser in einem späteren Prozessschritt eingefügt bzw. eingeklickt werden kann.

Ebenso denkbar ist die Verwendung als steckbares aktives optisches Kabel, um Peripheriegeräte anzuschließen, wobei das Kabel in den Stecker-Enden die Signalverarbeitung, Signalwandlung und Ein- bzw. Auskopplung der Eingangs- bzw. Ausgangssignale vornimmt.

Hierbei können auch bidirektionale Kabel, insbesondere wenn Sende- und Empfangskomponente in einem Aufnehm-/Ausrichtmodul integriert sind, oder laufrichtungsunabhängige Kabel, wenn der elektro-optische Wandler zugleich auch ein opto-elektrischer Wandler ist, zur Verfügung gestellt werden.

Darüber hinaus lässt sich ein neuartiger Aufbau eines miniaturisierten elektro-optischen Senders und/oder eines miniaturisierten opto-elektrischen Empfängers mit am Aufnehm-/Ausrichtmodul fest verbundenem optischem Wellenleiter zur Übertragung von elektrischen Signalen über einen solchen optischen Wellenleiter mit dieser Vorrichtung realisieren.

Die vorliegende Erfindung zeichnet sich durch einen hohen Miniaturisierungsgrad aus, der auf die erfindungsgemäße Art der Positionierung, Modularisierung und Integrierung der Komponenten zurückzuführen ist. Dies ermöglicht den Aufbau von A[ctive]O[ptical]C[able]s mit miniaturisierten elektro-optischen Sendern und/oder opto-elektrischen Empfängern.

Durch die direkte Integration des Wellenleiters in das Aufnehm-/Ausrichtmodul, insbesondere durch den Einsatz transparenter Medien für die Fertigung des, insbesondere mechanischen, Aufnehm-/Ausrichtmoduls lassen sich sehr kurze Signalverbindungslängen, zum Beispiel Bonddrahtlängen, erzielen, was insbesondere bei sehr hohen Datenübertragungsraten zum Erhalt der Signalqualität beiträgt und die Latenzzeiten reduziert.

Ebenso lassen sich durch die Modularisierung gemäß der vorliegenden Erfindung erhebliche Kosten in der Produktion, zum Beispiel durch einen höheren Automatisierungsgrad, einsparen.

### Kurze Beschreibung der Zeichnungen

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 2 nachgeordneten Ansprüche verwiesen, andererseits werden weitere Ausgestaltungen, Merkmale und Vorteile der vorliegenden Erfindung nachstehend unter anderem anhand des durch Fig. 4 bis Fig. 8 veranschaulichten Ausführungsbeispiels näher erläutert.

Es zeigt:
- Fig. 1: in konzeptuell-schematischer Darstellung eine Vorrichtung aus dem Stand der Technik, mittels derer optische Signale unter einem Winkel von neunzig Grad zur Emissionsrichtung einkoppelbar sind;
- Fig. 2: in konzeptuell-schematischer Darstellung eine Vorrichtung aus dem Stand der Technik, mittels derer optische Signale mittels einer L-Halterung in zum Wellenleiter axialer Richtung einkoppelbar sind;
- Fig. 3: in perspektivischer Darstellung ein Beispiel für die Realisierung einer Ein- bzw. Auskoppelvorrichtung aus dem Stand der Technik;
- Fig. 4: in perspektivischer Darstellung ein Ausführungsbeispiel für ein Substrat, insbesondere Trägersubstrat, gemäß der vorliegenden Erfindung;
- Fig. 5: in perspektivischer Darstellung ein Ausführungsbeispiel für eine mit dem Substrat aus Fig. 4 gebildete Vorrichtung gemäß der vorliegenden Erfindung;
- Fig. 6: in perspektivischer Darstellung ein Ausführungsbeispiel für ein Aufnehm-/Ausrichtmodul gemäß der vorliegenden Erfindung, das Teil der Vorrichtung aus Fig. 5 ist;
- Fig. 7: in perspektivischer Darstellung das Aufnehm-/Ausrichtmodul aus Fig. 6 mit integriertem Wandler; und
- Fig. 8: in perspektivischer Darstellung das Aufnehm-/Ausrichtmodul aus Fig. 7 mit zugeordnetem Wellenleiter.

Gleiche oder ähnliche Ausgestaltungen, Elemente oder Merkmale sind in Fig. 4 bis Fig. 8 mit identischen Bezugszeichen versehen. Hinsichtlich der Sendeseite und der Empfangsseite wird zeichnerisch nicht unterschieden, jedoch weisen die den sendeseitigen Elementen entsprechenden empfangsseitigen Elemente ein um 40 höheres Bezugszeichen auf.

### Bester Weg zur Ausführung der vorliegenden Erfindung

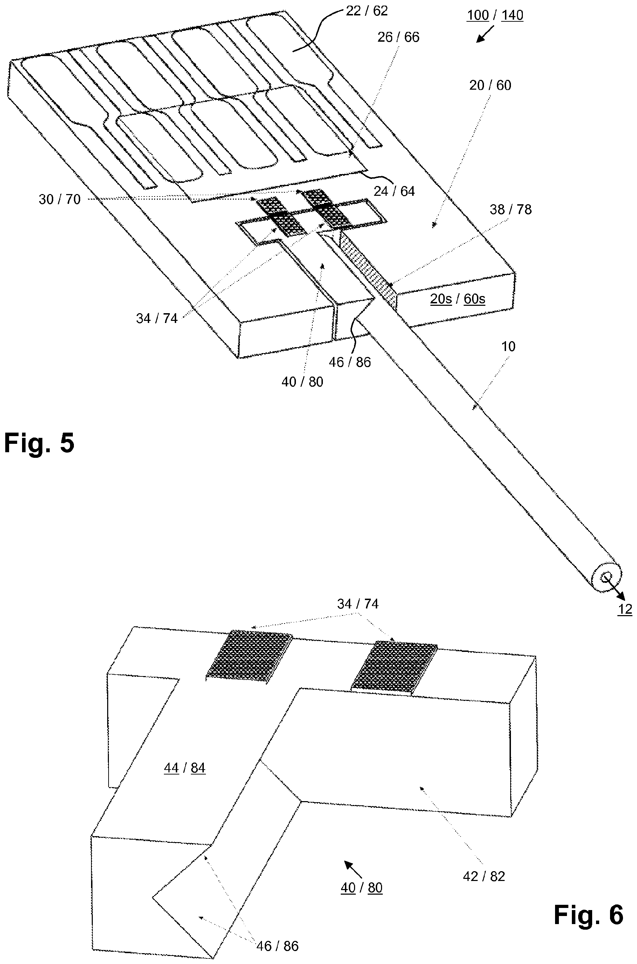

Bei sendeseitiger Auslegung zeigt Fig. 5 eine Vorrichtung 100 zum Einkoppeln optischer Signale in einen Wellenleiter 10. Die Vorrichtung 100 weist einen sendeseitigen Schaltkreis 26 auf, der auf Basis von von sendeseitigen Anschlusskontakten 22 eingehenden Signalen einen elektro-optischen Wandler 28 ansteuert, der die optischen Signale in Richtung der Achse 12 des Wellenleiters 10 aussendet.

Bei empfangsseitiger Auslegung zeigt Fig. 5 eine Vorrichtung 140 zum Auskoppeln optischer Signale aus mindestens einem Wellenleiter 10 in einen opto-elektrischen Wandler 68, der die optischen Signale aus Richtung der Achse 12 des Wellenleiters 10 aufnimmt und als elektrische Signale an einen empfangsseitigen Schaltkreis 66 übermittelt, der die eingehenden elektrischen Signale verarbeitet und an empfangsseitige Anschlusskontakte 62 ausgibt.

Erfindungsgemäß wird ein sendeseitiges Substrat 20 bzw. ein empfangsseitiges Substrat 60 bereitgestellt (vgl. Fig. 4). Die Anschlusskontakte 22 bzw. 62, die insbesondere metallische Druckkontakte oder Schleifkontakte sein können, sind auf dem Substrat 20 bzw. 60 geträgert, wobei diese auch im Substrat 20 bzw. 60 eingearbeitet, zum Beispiel eingegossen, sein können.

Das Substrat 20 bzw. 60 weist in Fig. 4 und in Fig. 5 eine Aussparung 24 bzw. 64 auf, die in etwa der Dimensionierung des ASIC 26 bzw. 66 (= Application-Specific Integrated Circuit oder anwendungsspezifische integrierte Schaltung, auch als custom chip bezeichnet) entspricht. Der ASIC 26 bzw. 66 wird vom elektro-optischen Wandler 28 bzw. vom opto-elektrischen Wandler 68 zur jeweiligen Signalverarbeitung benötigt.

Der Schaltkreis 26 bzw. 66 ist in die Aussparung 24 bzw. 64 integriert, vorzugsweise geklebt oder gesteckt, wobei die Höhe des Substrats 20 bzw. 60 etwa der Höhe des Schaltkreises 26 bzw. 66 entspricht.

Der Schaltkreis 26 bzw. 66 kann hierbei zumindest partiell auch selbst mit den Anschlusskontakten 22 bzw. 62 ausgeführt sein, wie Fig. 4 und Fig. 5 entnehmbar.

Das Substrat 20 bzw. 60 weist an seiner einem optischen Wellenleiter 10 zugewandten Seite eine Ausnehmung 38 bzw. 78 auf, die in etwa der Dimensionierung eines Aufnehm-/Ausrichtmoduls 40 bzw. 80 entspricht. Der Wandler 28 bzw. 68 ist diesem Aufnehm-/Ausrichtmodul 40 bzw. 80 zugeordnet, insbesondere in diesem aufgenommen oder integriert, zum Beispiel in diesem eingebettet. Die Emissions- bzw. Rezeptionsrichtung des Wandlers 28 bzw. 68 ist hierbei im Wesentlichen parallel zu einer im Aufnehm-/Ausrichtmodul 40 bzw. 80 vorgesehenen nut- oder rinnenförmigen, insbesondere V-förmigen, lateralen Vertiefung 46 bzw. 86, mittels derer der Wellenleiter 10 in Bezug auf den Wandler 28 bzw. 68 ausgerichtet werden kann.

Das Aufnehm-/Ausrichtmodul 40 bzw. 80 ist aus optisch transparentem Material gefertigt, das mechanische Belastungen aufnehmen kann, und ist kraftschlüssig in der in dem Substrat 20 bzw. 60 vorgesehenen Ausnehmung 38 bzw. 78 aufgenommen, insbesondere eingepasst. Auf der Oberfläche des Substrats 20 bzw. 60 befinden sich Kontaktflächen 30 bzw. 70, die insbesondere metallische Druckkontakte oder Schleifkontakte sein können, zur Kommunikation der im Substrat 20 bzw. 60 liegenden Komponenten, insbesondere des Wandlers 28 bzw. 68, mit den Komponenten des Aufnehm-/Ausrichtmoduls 40 bzw. 80, wozu das Aufnehm-/Ausrichtmodul 40 bzw. 80 mit den Kontaktflächen 30 bzw. 70 des Substrats 20 bzw. 60 korrespondierende Kontaktflächen 34 bzw. 74, insbesondere Druckkontakte oder Schleifkontakte, aufweist (vgl. Fig. 5 und Fig. 6).

Aus Fig. 5 geht hervor, dass das Aufnehm-/Ausrichtmodul 40 bzw. 80 bündig der Stirnseite 20s bzw. 60s des Substrats 20 bzw. 60 zuordbar ist. Das Aufnehm-/Ausrichtmodul 40 bzw. 80 liegt hierbei in einer Ebene mit dem Schaltkreis 26 bzw. 66 und mit den Anschlusskontakten 22 bzw. 62 und weist zur kraftschlüssigen Integration in das Substrat 20 bzw. 60 eine annähernd T-förmige Geometrie auf, sich zusammensetzend aus
- einem sich in axialer Richtung des Wellenleiters 10 erstreckenden Ausrichtungsteil 44 bzw. 84 mit seitlich integrierter oder seitlich angeformter oder seitlich aufmontierter V-förmiger Vertiefung 46 bzw. 86 und
- einem sich quer, insbesondere senkrecht, zur axialen Richtung des Wellenleiters 10 erstreckenden Aufnahmeteil 42 bzw. 82 zur Aufnahme des Wandlers 28 bzw. 68
(vgl. Fig. 5, Fig. 6, Fig. 7 und Fig. 8).

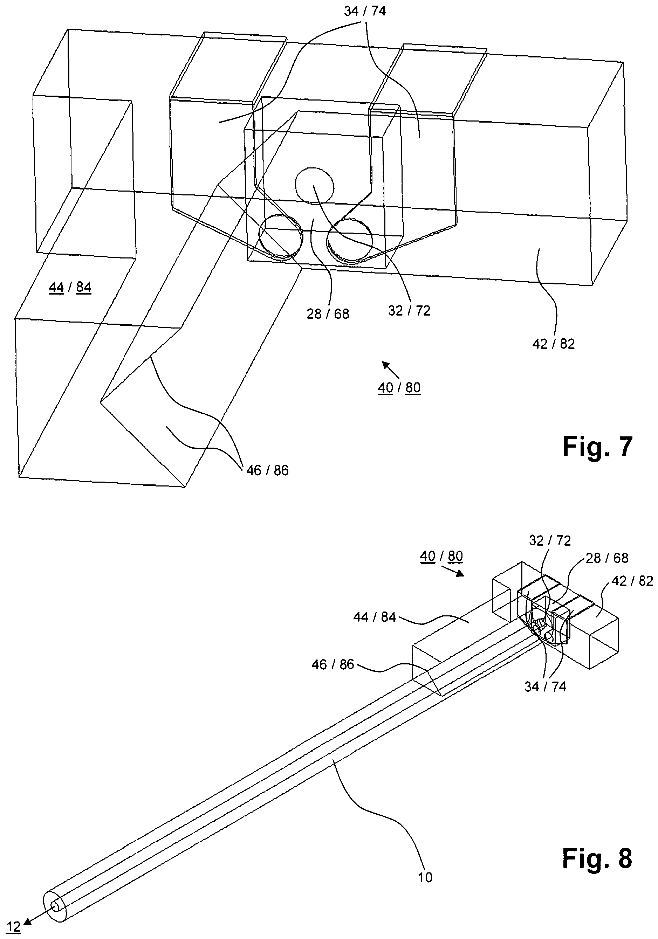

Wie der Darstellung in Fig. 5 und in Fig. 8 entnehmbar, ist die Vertiefung 46 bzw. 86 einem Teilbereich, insbesondere einem Abschnitt, der Außenkontur des Wellenleiters 10 zugeordnet; insbesondere umschließt die Vertiefung 46 bzw. 86 den Wellenleiter 10 nicht vollständig, sondern stellt lediglich auf einer Seite des Wellenleiters 10 eine Ausrichtungshilfe bereit, wobei auf der anderen Seite des Wellenleiters 10 der Gegenpart durch die Innenwand der Ausnehmung 38 bzw. 78 im Substrat 20 bzw. 60 gebildet ist.

Wie der Darstellung in Fig. 7 und in Fig. 8 entnehmbar, weist das Aufnahmeteil 42 bzw. 82 des Aufnehm-/Ausrichtmoduls 40 bzw. 80 einen zwischen dem Wandler 28 bzw. 68 und dem Wellenleiter 10 vorgesehenen Durchlass 32 bzw. 72 auf.

Dieser Durchlass 32 bzw. 72 befindet sich also vor der Öffnung des Wandlers 28 bzw. 68 und ist als Bohrung und/oder als optisch transparentes Medium, insbesondere als transparenter Werkstoff, für die optischen Signale ausgestaltet.

Fig. 8 zeigt das Aufnehm-/Ausrichtmodul 40 bzw. 80 mit zugeordnetem, als Glasfaser ausgestaltetem Wellenleiter 10, der mittels Klebeverbindung, Schweißverbindung (Aufschmelzen), Clinchen oder sonstigem Fügen partiell in der Vertiefung 46 bzw. 86 aufgenommen, insbesondere versenkt, ist.

### Bezugszeichenliste

- 10: Wellenleiter
- 12: axiale Richtung des Wellenleiters 10
- 20: sendeseitiges Substrat, insbesondere sendeseitige Leiterplatte
- 20s: Stirnseite des sendeseitigen Substrats 20
- 22: sendeseitiger Anschlusskontakt
- 24: sendeseitige Aussparung zur Aufnahme des sendeseitigen Schaltkreises 26
- 26: sendeseitiger Schaltkreis, insbesondere sendeseitige anwendungsspezifische integrierte Schaltung oder sendeseitiger Application-Specific Integrated Circuit (ASIC), zum Beispiel sendeseitiger custom chip
- 28: elektro-optischer Wandler, insbesondere aktiv-optische Sendeeinheit
- 30: Kontakt, insbesondere Kontaktfläche, des sendeseitigen Substrats 20
- 32: sendeseitiger Durchlass, insbesondere Bohrung und/oder transparentes Medium, für optische Signale
- 34: Kontakt, insbesondere Kontaktfläche, des sendeseitigen Aufnehm-/Ausrichtmoduls 40
- 38: Ausnehmung im sendeseitigen Substrat 20
- 40: sendeseitiges Aufnehm-/Ausrichtmodul
- 42: Aufnahmeteil des sendeseitigen Aufnehm-/Ausrichtmoduls 40
- 44: Ausrichtungsteil des sendeseitigen Aufnehm-/Ausrichtmoduls 40
- 46: Vertiefung im sendeseitigen Ausrichtungsteil 44
- 60: empfangsseitiges Substrat, insbesondere empfangsseitige Leiterplatte
- 60s: Stirnseite des empfangsseitigen Substrats 60
- 62: empfangsseitiger Anschlusskontakt
- 64: empfangsseitige Aussparung zur Aufnahme des empfangsseitigen Schaltkreises 66
- 66: empfangsseitiger Schaltkreis, insbesondere empfangsseitige anwendungsspezifische integrierte Schaltung oder empfangsseitiger Application-Specific Integrated Circuit (ASIC), zum Beispiel empfangsseitiger custom chip
- 68: opto-elektrischer Wandler, insbesondere aktiv-optische Empfangseinheit
- 70: Kontakt, insbesondere Kontaktfläche, des empfangsseitigen Substrats 60
- 72: empfangsseitiger Durchlass, insbesondere Bohrung und/oder transparentes Medium, für optische Signale
- 74: Kontakt, insbesondere Kontaktfläche, des empfangsseitigen Aufnehm-/Ausrichtmoduls 80
- 78: Ausnehmung im empfangsseitigen Substrat 60
- 80: empfangsseitiges Aufnehm-/Ausrichtmodul
- 82: Aufnahmeteil des empfangsseitigen Aufnehm-/Ausrichtmoduls 80
- 84: Ausrichtungsteil des empfangsseitigen Aufnehm-/Ausrichtmoduls 80
- 86: Vertiefung im empfangsseitigen Ausrichtungsteil 84
- 100: sendeseitige Vorrichtung
- 140: empfangsseitige Vorrichtung
- ASIC: Schaltkreis, insbesondere anwendungsspezifische integrierte Schaltung oder Application-Specific Integrated Circuit (ASIC), zum Beispiel custom chip (= Stand der Technik; vgl. Fig. 1 und Fig. 2)
- HA: Halterung (= Stand der Technik; vgl. Fig. 2)
- SI: optisches Signal (= Stand der Technik; vgl. Fig. 1 und Fig. 2)
- US: Umlenkspiegel (= Stand der Technik; vgl. Fig. 1)
- WA: optischer Wandler (= Stand der Technik; vgl. Fig. 1 und Fig. 2)
- WL: optischer Wellenleiter (= Stand der Technik; vgl. Fig. 1 und Fig. 2)

## Patentansprüche

1. Vorrichtung (100) zum Einkoppeln optischer Signale in mindestens einen Wellenleiter (10), welche Vorrichtung (100) mindestens einen sendeseitigen Schaltkreis (26) aufweist, der auf Basis von von sendeseitigen Anschlusskontakten (22) eingehenden Signalen mindestens einen elektro-optischen Wandler (28) ansteuert, der die optischen Signale in Richtung der Achse (12) des Wellenleiters (10) aussendet,
- wobei der elektro-optische Wandler (28) in mindestens einem sendeseitigen Aufnehm-/Ausrichtmodul (40) aufgenommen, insbesondere eingebettet, ist,
- wobei das sendeseitige Aufnehm-/Ausrichtmodul (40) mindestens eine nut- oder rinnenförmige Vertiefung (46) zum Ausrichten des Wellenleiters (10) in Bezug auf den elektro-optischen Wandler (28) aufweist und
- wobei das sendeseitige Aufnehm-/Ausrichtmodul (40) kraftschlüssig in einer in einem sendeseitigen Substrat (20) vorgesehenen Ausnehmung (38) aufgenommen, insbesondere eingepasst, ist,
**dadurch gekennzeichnet,**
**dass** die Vertiefung (46) lateral an einem sich in axialer Richtung des Wellenleiters (10) erstreckenden Ausrichtungsteil (44) des Aufnehm-/Ausrichtmoduls (40) angeordnet ist und so eine Ausrichtungshilfe bereitstellt, wobei auf der anderen Seite des Wellenleiters (10) der Gegenpart durch eine Innenwand der Ausnehmung (38) gebildet ist.

2. Vorrichtung (140) zum Auskoppeln optischer Signale aus mindestens einem Wellenleiter (10) in mindestens einen opto-elektrischen Wandler (68), der die optischen Signale aus Richtung der Achse (12) des Wellenleiters (10) aufnimmt und als elektrische Signale an mindestens einen empfangsseitigen Schaltkreis (66) übermittelt, der die eingehenden elektrischen Signale verarbeitet und an empfangsseitige Anschlusskontakte (62) ausgibt,
- wobei der opto-elektrische Wandler (68) in mindestens einem empfangsseitigen Aufnehm-/Ausrichtmodul (80) aufgenommen, insbesondere eingebettet, ist,
- wobei das empfangsseitige Aufnehm-/Ausrichtmodul (80) mindestens eine nut- oder rinnenförmige Vertiefung (86) zum Ausrichten des Wellenleiters (10) in Bezug auf den opto-elektrischen Wandler (68) aufweist und
- wobei das empfangsseitige Aufnehm-/Ausrichtmodul (80) kraftschlüssig in einer in einem empfangsseitigen Substrat (60) vorgesehenen Ausnehmung (78) aufgenommen, insbesondere eingepasst, ist,
**dadurch gekennzeichnet,**
**dass** die Vertiefung (86) lateral an einem sich in axialer Richtung des Wellenleiters (10) erstreckenden Ausrichtungsteil (84) des Aufnehm-/Ausrichtmoduls (80) angeordnet ist und so eine Ausrichtungshilfe bereitstellt, wobei auf der anderen Seite des Wellenleiters (10) der Gegenpart durch eine Innenwand der Ausnehmung (78) gebildet ist.

3. Vorrichtung gemäß Anspruch 1 oder 2, **dadurch gekennzeichnet, dass** der Wellenleiter (10) bezüglich seines Querschnitts zumindest partiell in der Vertiefung (46; 86) aufgenommen ist.

4. Vorrichtung gemäß Anspruch 3, **dadurch gekennzeichnet, dass** der Wellenleiter (10) bezüglich seines Querschnitts zumindest partiell in der Vertiefung (46; 86) versenkt ist.

5. Vorrichtung gemäß mindestens einem der Ansprüche 1 bis 4, **dadurch gekennzeichnet, dass** die Vertiefung (46; 86) V-förmig ausgebildet ist.

6. Vorrichtung gemäß mindestens einem der Ansprüche 1 bis 5, **dadurch gekennzeichnet, dass** das Aufnehm-/Ausrichtmodul (40; 80) zur Aufnahme des Wandlers (28; 68) ein Aufnahmeteil (42; 82) aufweist, das sich quer, insbesondere senkrecht, zur axialen Richtung des Wellenleiters (10) erstreckt.

7. Vorrichtung gemäß mindestens einem der Ansprüche 1 bis 6, **dadurch gekennzeichnet, dass** das vom Wandler (28; 68) abgewandte Ende des Aufnehm-/Ausrichtmoduls (40; 80), insbesondere das vom Wandler (28; 68) abgewandte Ende des Ausrichtungsteils (44; 84), im Wesentlichen bündig mit der Stirnseite (20s; 60s) des Substrats (20; 60) abschließt.

8. Vorrichtung gemäß mindestens einem der Ansprüche 1 bis 7, **dadurch gekennzeichnet, dass** die Höhe des Aufnehm-/Ausrichtmoduls (40; 80) im Wesentlichen bündig mit der Höhe des Substrats (20; 60) abschließt.

9. Vorrichtung gemäß mindestens einem der Ansprüche 1 bis 8, **dadurch gekennzeichnet, dass** das Aufnehm-/Ausrichtmodul (40; 80) aus einem optisch transparenten Medium gefertigt ist.

10. Vorrichtung gemäß mindestens einem der Ansprüche 1 bis 9, **dadurch gekennzeichnet, dass** das Aufnehm-/Ausrichtmodul (40; 80), insbesondere das Aufnahmeteil (42; 82), mindestens einen zwischen dem Wandler und dem Wellenleiter vorgesehenen Durchlass (32; 72), insbesondere mindestens eine Bohrung und/oder mindestens ein optisch transparentes Medium, für die optischen Signale aufweist.

11. Vorrichtung gemäß mindestens einem der Ansprüche 1 bis 10, **dadurch gekennzeichnet, dass**
- das Substrat (20; 60) mindestens einen Kontakt (30; 70), insbesondere mindestens eine Kontaktfläche, und/oder
- das Aufnehm-/Ausrichtmodul (40; 80) mindestens einen Kontakt (34; 74), insbesondere mindestens eine Kontaktfläche,
zum Anschließen des Wandlers (28; 68) aufweist, wobei der Kontakt (30; 70) des Substrats (20; 60) dem Kontakt (34; 74) des Aufnehm-/Ausrichtmoduls (40; 80) zugeordnet ist.

12. Vorrichtung gemäß mindestens einem der Ansprüche 1 bis 11, **dadurch gekennzeichnet, dass** der Schaltkreis (26; 66) im Wesentlichen in der Ebene des die Anschlusskontakte (22; 62) aufweisenden Substrats (20; 60) angeordnet ist.

13. Vorrichtung gemäß mindestens einem der Ansprüche 1 bis 12, **dadurch gekennzeichnet, dass** der Schaltkreis (26; 66) in das Substrat (20; 60) eingebettet ist.

14. Vorrichtung gemäß mindestens einem der Ansprüche 1 bis 13, **dadurch gekennzeichnet,**
- **dass** der elektro-optische Wandler (28) mindestens ein Laser, insbesondere mindestens ein Vertical Cavity Surface Emitting Laser (VCSEL), ist und/oder
- **dass** der opto-elektrische Wandler (68) mindestens eine Diode, insbesondere mindestens eine Fotodiode, ist und/oder
- **dass** der Schaltkreis (26; 66) mindestens eine anwendungsspezifische integrierte Schaltung oder mindestens ein Application-Specific Integrated Circuit (ASIC), insbesondere mindestens ein custom chip, ist.

15. Verwendung mindestens einer Vorrichtung (100; 140) gemäß mindestens einem der Ansprüche 1 bis 14 zum Aufbau mindestens eines, insbesondere steckbaren, aktiven optischen Kabels.

## Claims

1. A device (100) for coupling optical signals into at least one waveguide (10), the device (100) comprising at least one send-site circuit (26), which based on incoming signals from send-site terminal contacts (22) actuates at least one electro-optical converter (28), which sends out the optical signals in the direction of the axis (12) of the waveguide (10),
- wherein the electro-optical converter (28) is incorporated, in particular embedded, in at least one send-site reception/alignment module (40),
- wherein the send-site reception/alignment module (40) comprises at least one groove- or trough-shaped depression (46) for aligning the waveguide (10) in relation to the electro-optical converter (28), and
- wherein the send-site reception/alignment module (40) is, in a force-fit manner, incorporated, in particular fitted, in a recess (38) provided in a send-site substrate (20),
**characterized in**
**that** the depression (46) is laterally arranged at an alignment part (44) of the reception/alignment module (40), said alignment part (44) extending in an axial direction of the waveguide (10), the depression (46) thereby providing an alignment aid, wherein, on the other side of the waveguide (10), the counterpart is formed by an inner wall of the recess (38).

2. A device (140) for decoupling optical signals from at least one waveguide (10) in at least one opto-electrical converter (68), which receives the optical signals from the direction of the axis (12) of the waveguide (10) and transmits them as electrical signals to at least one receive-site circuit (66), which processes the incoming electrical signals and outputs them to receive-site terminal contacts (62),
- wherein the opto-electrical converter (68) is incorporated, in particular embedded, in at least one receive-site reception/alignment module (80),
- wherein the receive-site reception/alignment module (80) comprises at least one groove- or trough-shaped depression (86) for aligning the waveguide (10) in relation to the opto-electrical converter (68), and
- wherein the receive-site reception/alignment module (80) is, in a force-fit manner, incorporated, in particular fitted, in a recess (78) provided in a receive-site substrate (60),
**characterized in**
**that** the depression (86) is laterally arranged at an alignment part (84) of the reception/alignment module (80), said alignment part (84) extending in an axial direction of the waveguide (10), the depression (86) thereby providing an alignment aid, wherein, on the other side of the waveguide (10), the counterpart is formed by an inner wall of the recess (78).

3. The device according to claim 1 or 2, **characterized in that** the waveguide (10) is, relative to its cross section, at least partially incorporated into the depression (46; 86).

4. The device according to claim 3, **characterized in that** the waveguide (10) is, relative to its cross section, at least partially recessed in the depression (46; 86).

5. The device according to at least one of claims 1 to 4, **characterized in that** the depression (46; 86) has a V-shaped design.

6. The device according to at least one of claims 1 to 5, **characterized in that** the reception/alignment module (40; 80) for receiving the converter (28; 68) comprises a receiving part (42; 82) which extends transversely, in particular perpendicularly, to the axial direction of the waveguide (10).

7. The device according to at least one of claims 1 to 6, **characterized in that** the end of the reception/alignment module (40; 80) facing away from the converter (28; 68), in particular the end of the alignment part (44; 84) facing away from the converter (28; 68), essentially abuts flush against the front face (20s; 60s) of the substrate (20; 60).

8. The device according to at least one of claims 1 to 7, **characterized in that** the height of the reception/alignment module (40; 80) essentially abuts flush against the height of the substrate (20; 60).

9. The device according to at least one of claims 1 to 8, **characterized in that** the reception/alignment module (40; 80) is made out of an optically transparent medium.

10. The device according to at least one of claims 1 to 9, **characterized in that** the reception/alignment module (40; 80), in particular the receiving part (42; 82), comprises at least one outlet (32; 72), in particular at least one bore and/or at least one optically transparent medium, said outlet (32; 72) provided between the converter and the waveguide and said outlet (32; 72) provided for the optical signals.

11. The device according to at least one of claims 1 to 10, **characterized in that**
- the substrate (20; 60) comprises at least one contact (30; 70), in particular at least one contact surface, and/or
- the reception/alignment module (40; 80) comprises at least one contact (34; 74), in particular at least one contact surface,
for connecting the converter (28; 68), wherein the contact (30; 70) of the substrate (20; 60) is assigned to the contact (34; 74) of the reception/alignment module (40; 80).

12. The device according to at least one of claims 1 to 11, **characterized in that** the circuit (26; 66) is arranged essentially in the plane of the substrate (20; 60) comprising the terminal contacts (22; 62).

13. The device according to at least one of claims 1 to 12, **characterized in that** the circuit (26; 66) is embedded in the substrate (20; 60).

14. The device according to at least one of claims 1 to 13, **characterized in**
- **that** the electro-optical converter (28) is at least one laser, in particular at least one vertical cavity surface emitting laser (VCSEL), and/or
- **that** the opto-electrical converter (68) is at least one diode, in particular at least one photodiode, and/or
- **that** the circuit (26; 66) is at least one application-specific integrated circuit (ASIC), in particular at least one custom chip.

15. Use of at least one device (100; 140) according to at least one of claims 1 to 14 for building at least one, in particular pluggable, active optical cable.

## Revendications

1. Dispositif (100) pour coupler des signaux optiques dans au moins un guide d'ondes (10), le dispositif (100) comportant au moins un circuit côté émission (26), qui, sur la base de signaux provenant de contacts de raccordement côté émission (22), contrôle au moins un convertisseur électro-optique (28), lequel convertisseur électro-optique (28) émettant les signaux optiques dans la direction de l'axe (12) du guide d'ondes (10),
- le convertisseur électro-optique (28) étant incorporé, en particulier noyé, dans au moins un module de réception/alignement côté émission (40),
- le module de réception/alignement côté émission (40) comportant au moins une dépression (46) en forme de rainure ou d'auge pour aligner le guide d'ondes (10) par rapport au convertisseur électro-optique (28), et
- le module de réception/alignement côté émission (40) étant, de manière forcée, incorporé, en particulier ajusté, dans un évidement (38) prévu dans un substrat côté émission (20),
**caractérisé en ce**
**que** la dépression (46) est disposée latéralement sur une partie d'alignement (44) du module de réception/alignement (40), ladite partie d'alignement (44) s'étendant dans une direction axiale du guide d'ondes (10), la dépression (46) fournissant ainsi une aide à l'alignement, où, de l'autre côté du guide d'ondes (10), la contrepartie est formée par une paroi intérieure de l'évidement (38).

2. Dispositif (140) pour découpler des signaux optiques d'au moins un guide d'ondes (10) dans au moins un convertisseur opto-électrique (68), qui reçoit les signaux optiques depuis la direction de l'axe (12) du guide d'ondes (10) et les transmet comme signaux électriques à au moins un circuit côté réception (66), qui traite les signaux électriques entrants et les transmet à des contacts de raccordement côté réception (62),
- le convertisseur opto-électrique (68) étant incorporé, en particulier noyé, dans au moins un module de réception/alignement côté réception (80),
- le module de réception/alignement côté réception (80) comportant au moins une dépression (86) en forme de rainure ou d'auge pour aligner le guide d'ondes (10) par rapport au convertisseur opto-électrique (68), et
- le module de réception/alignement côté réception (80) étant, de manière forcée, incorporé, en particulier ajusté, dans un évidement (78) prévu dans un substrat côté émission (60),
**caractérisé en ce**
**que** la dépression (86) est disposée latéralement sur une partie d'alignement (84) du module de réception/alignement (80), ladite partie d'alignement (84) s'étendant dans une direction axiale du guide d'ondes (10), la dépression (86) fournissant ainsi une aide à l'alignement, où, de l'autre côté du guide d'ondes (10), la contrepartie est formée par une paroi intérieure de l'évidement (78).

3. Dispositif selon la revendication 1 ou 2, **caractérisé en ce que** le guide d'ondes (10) est, par rapport à sa section transversale, au moins partiellement incorporé dans la dépression (46 ; 86).

4. Dispositif selon la revendication 3, **caractérisé en ce que** le guide d'ondes (10) est, par rapport à sa section transversale, au moins partiellement évidé dans la dépression (46 ; 86).

5. Dispositif selon au moins l'une des revendications 1 à 4, **caractérisé en ce que** la dépression (46 ; 86) est en forme de V.

6. Dispositif selon au moins l'une des revendications 1 à 5, **caractérisé en ce que** le module de réception/alignement (40 ; 80) pour recevoir le convertisseur (28 ; 68) comporte une partie de réception (42 ; 82) qui s'étend transversalement, en particulier perpendiculairement, à la direction axiale du guide d'ondes (10).

7. Dispositif selon au moins l'une des revendications 1 à 6, **caractérisé en ce que** l'extrémité du module réception/alignement (40 ; 80) opposée au convertisseur (28 ; 68), en particulier l'extrémité de la partie d'alignement (44 ; 84) opposée au convertisseur (28 ; 68), vient essentiellement au même niveau en butée contre la face frontale (20s ; 60s) du substrat (20 ; 60).

8. Dispositif selon au moins l'une des revendications 1 à 7, **caractérisé en ce que** la hauteur du module de réception/alignement (40 ; 80) vient essentiellement au même niveau en butée contre la hauteur du substrat (20 ; 60).

9. Dispositif selon au moins l'une des revendications 1 à 8, **caractérisé en ce que** le module réception/alignement (40 ; 80) est réalisé en un milieu optiquement transparent.

10. Dispositif selon au moins l'une des revendications 1 à 9, **caractérisé en ce que** le module de réception/alignement (40 ; 80), en particulier la partie de réception (42 ; 82), comporte au moins une sortie (32 ; 72), en particulier au moins un alésage et/ou au moins un milieu optiquement transparent, ladite sortie (32 ; 72) étant prévue entre le convertisseur et le guide d'ondes et ladite sortie (32 ; 72) étant prévue pour les signaux optiques.

11. Dispositif selon au moins l'une des revendications 1 à 10, **caractérisé en ce que**
- le substrat (20 ; 60) comporte au moins un contact (30 ; 70), en particulier au moins une surface de contact, et/ou
- le module de réception/alignement (40 ; 80) comporte au moins un contact (34 ; 74), en particulier au moins une surface de contact,
pour le raccordement du convertisseur (28 ; 68), le contact (30 ; 70) du substrat (20 ; 60) étant associé au contact (34 ; 74) du module de réception/alignement (40 ; 80).

12. Dispositif selon au moins l'une des revendications 1 à 11, **caractérisé en ce que** le circuit (26 ; 66) est disposé essentiellement dans le plan du substrat (20 ; 60) comportant les contacts de raccordement (22 ; 62).

13. Dispositif selon au moins l'une des revendications 1 à 12, **caractérisé en ce que** le circuit (26 ; 66) est incorporé dans le substrat (20 ; 60).

14. Dispositif selon au moins l'une des revendications 1 à 13, **caractérisé en ce**
- **que** le convertisseur électro-optique (28) est au moins un laser, en particulier au moins un laser à émission de surface à cavité verticale (VCSEL), et/ou
- **que** le convertisseur opto-électrique (68) est au moins une diode, en particulier au moins une photodiode, et/ou
- **que** le circuit (26 ; 66) est au moins un circuit intégré spécifique à une application (ASIC), en particulier au moins un custom chip.

15. Utilisation d'au moins un dispositif (100 ; 140) selon au moins l'une des revendications 1 à 14 pour la construction d'au moins un câble optique actif, en particulier enfichable.
